# EUROPÄISCHE PATENTSCHRIFT

(11) **EP 2 280 116 B1**
(45) Veröffentlichungstag und Bekanntmachung des Hinweises auf die Patenterteilung: **14.03.2012**
(21) Anmeldenummer: 10169950.2
(22) Anmeldetag: 19.07.2010
(51) Int. Cl.: D21B 1/34

(54) **Pulper mit Torque-Motor und Verfahren zum Betrieb eines solchen Pulpers**
Pulper with torque motor and method for operating such a pulper
Triturateur doté d'un moteur à couple et procédé de fonctionnement d'un tel triturateur

(30) Priorität: 29.07.2009 DE 102009035247
(43) Veröffentlichungstag der Anmeldung: 02.02.2011
(73) Patentinhaber: BTA International GmbH, 85276 Pfaffenhofen a. d. Ilm (DE); Biotec Sistemi S.r.l., 16010 Serra Riccò Genova (IT)
(72) Erfinder: Wiljan, Harry, 80469 München (DE); Bozano, Stefano, 16100 Genova (IT); Carra, Roland, 80939 München (DE)
(74) Vertreter: Graf Glück Habersack Kritzenberger

(56) Entgegenhaltungen:
- DE-A1- 3 149 135
- US-A- 4 482 095

## Beschreibung

Die Erfindung betrifft einen Pulper und ein diesbezügliches Arbeitsverfahren desselben.

Pulper, auch Stofflöser genannt, werden zur Aufbereitung von Stoffgemischen genutzt, die leicht zerfaserbare Bestandteile beinhalten. Ein wichtiger Anwendungsbereich liegt bei der Aufbereitung von Abfällen und abfallähnlichen Stoffen, beispielsweise Altpapier oder Abfälle für eine biologische Verwertung, bei der biologisch gut zu verwertbare Bestandteile von den nicht biologisch verwertbaren Bestandteilen durch den Pulper getrennt werden.

Ein solcher Pulper weist üblicherweise einen Behälter auf, der mit einem Rotor versehen ist. Beim Betrieb des Pulpers wird das aufzubereitende Stoffgemisch zusammen mit einer Flüssigkeit, im Allgemeinen Wasser, in den Behälter eingefüllt. Der Rotor wird in Rotationen versetzt und erzeugt hierdurch starke Strömungskräfte. Diese Strömungskräfte sorgen dafür, dass die im Pulper enthaltenen leicht aufschließbaren Feststoffe zerfasert werden. Neben der Zerfaserung findet teilweise auch eine Verkürzung von Fasern statt, bzw. geht ein Teil der zerfaserbaren Stoffe und anderer im Stoffgemisch enthaltenen Substanzen in Lösung. Nachdem das Schwergewicht des Vorgangs aber in der Zerfaserung besteht, wird hier lediglich von "Zerfaserung" oder "Zerfasern" gesprochen und die daneben statt findende Zerkleinerung und Auflösung nicht gesondert erwähnt, die jedoch hierin mit einzubeziehen ist.

Die zerfaserten Bestandteile des eingebrachten Stoffgemisches bilden zusammen mit der Flüssigkeit eine Suspension, die z.B. über ein Sieb aus dem Pulper abgezogen werden kann.

Das Grundsystem eines solchen Pulpers ist in der DE 31 49 135 beschrieben. Hier wird ein im Auflösebehälter bodenseitig eingebrachter Rotor via einer Antriebswelle durch einen Elektromotor betrieben. Hinsichtlich des Antriebes für den Rotor ist es im Stand der Technik ferner bekannt, neben einem hydraulischen System, bei dem das Moment eines Asynchron-Elektromotors über eine Hydraulikpumpe und einen Ölmotor an den Rotor geführt wird, ein winkelrechtes Rädergetriebe einzusetzen, das mit Hilfe eines Asynchronmotors betrieben wird. Neben den gemeinsamen Nachteilen hoher Unterhaltskosten und einem schlechten Wirkungsgrad hat der Getriebeantrieb überdies den Nachteil, dass der Pulper mit einem sehr hohen Gewicht einseitig belastet wird. Nachteilhaft sind auch die allgemein als mechanische Schwachpunkte hinzukommenden, in einer Vielzahl benötigten Lager und Kupplungen. Auch verursachen obige Motor-Systeme laute Laufgeräusche. Um diese Nachteile einigermaßen zu beheben, ist es im Stand der Technik bekannt, sog. Clustermotoren einzusetzen, bei der eine Vielzahl - meist vier Motoren - zu einer Einheit zusammengeschaltet sind. Derartige Clustermotoren sind zwar kompakt und zentrisch auf den Rotor des Pulpers positionierbar, so dass das Gewicht des Clustermotors zentrisch auf den Pulper und seinen Behälter wirkt, jedoch sind damit auch weitere aufgrund einer Reibung der Zusammenschlüsse der Motoren verursachte Verluste mit einzubeziehen. Ferner ist der Nachteil von mechanischen Schwachpunkten, wie Lager, bei dieser Art Motor nicht behoben.

Gemäß einem weiteren Konzept eines Pulpers umfasst der Antrieb einen Elektromotor, dem ein Zugmittel-Getriebe, beispielsweise ein Riementrieb nachgeschaltet ist. Hiermit lassen sich Rotoren für eine Drehzahl von etwa 200 U/min bis 500 U/min mittels eines einfachen Antriebs realisieren, wobei allerdings sehr große teure Riemenscheiben zu verwenden sind. Da die verwendeten großen Riemenscheiben ein großes Trägheitsmoment haben, wird in der Regel zur Vermeidung eines Bruchs des Rotors eine Last begrenzende bzw. Last trennende Kupplung an oder in der Nabe zwischen der Welle und der Riemenscheibe eingesetzt, vorzugsweise eine Rutschkupplung. Bei noch geringeren Drehzahlen ist es notwendig, einen doppelstrangigen Riementrieb einzusetzen. Dabei sind sehr hohe Drehmomente an dem Rotor erzeugbar, die jedoch eine entsprechende Dimensionierung der Antriebselemente erfordern, wodurch ein solches Konzept sehr teuer und wartungsintensiv wird. Überdies steigt der Platzbedarf des Pulpers aufgrund seines voluminösen Aufbaus.

Aufgabe der Erfindung ist es, unter Behebung obiger Nachteile einen geeigneten Antrieb für den Betrieb des Rotors eines Pulpers zu konditionieren. Diese Aufgabe wird gelöst durch einen Pulper gemäß Anspruch 1 und ein Pulperverfahren gemäß Anspruch 3.

Der erfindungsgemäße Pulper zeichnet sich dadurch aus, dass die Antriebseinheit einen Drehstrom-Synchronmotor umfasst, der als mehrpoliger Synchronmotor ausgeführt ist. Die Anzahl der Pole reicht vorteilhaft von 12 - 64. Der Drehstrom-Synchronmotor läuft mit einer Drehzahl zwischen 0 und 1000 Umdrehungen pro Minute, ggf. mit umgekehrter Drehrichtung, wobei der Motor an den Ausgang eines von einer Steuereinrichtung gesteuerten Frequenzumformers angeschlossen ist und der Antriebswellenabtrieb ohne Getriebe direkt mit der Rotorwelle verbunden ist. Hierdurch bewegt sich kein ein Drehmoment und/oder ein Kraft übertragendes Antriebselement schneller als die Antriebswelle, bzw. der Antriebswellenabtrieb. Hinsichtlich der Wirkverbindung zwischen Antriebswellenabtrieb und Rotorwelle ist es möglich, eine motorseitige Antriebswelle am Antriebswellenabtrieb vorzusehen und diese Motor-Antriebswelle dann direkt an die Rotorwelle anzukoppeln. Demgegenüber ist es auch möglich, die Rotorwelle des Pulpers als Antriebswelle des Motors zu nutzen, sodass der Antriebswellenabtrieb des Motors bereits die Rotorwelle darstellt.

Diese erfindungsgemäße Gestaltung des Pulpers weist gegenüber herkömmlichen Pulpervorrichtungen wesentliche Vorteile auf. Durch die Verwendung eines Synchronmotors in Verbindung mit einem vorgeschalteten Frequenzumformer kann an dem Rotor des Pulpers über den gesamten Drehzahlbereich das maximale Drehmoment bereitgestellt werden, wodurch sich beispielsweise die Anlaufphase erleichtert und die Vorrichtung auch unter Last angefahren werden kann: Die Stoffgemische der Pulpe können nämlich bei langsamer Drehung oder bei Stillstand des Rotors ein inneres, nicht fließendes Gefüge bilden, das den Rotor und dessen Rührschaufeln quasi einzementieren kann. Dann zeigen sich nachfolgend einer solchen "Ruhephase" die Eigenschaften der erfindungsgemäßen Kombination aus frequenzabhängigem Anfahren des Rotors mit direktem Rotorantrieb durch eine Anpassung an die Strukturviskosität der Pulpe besonders vorteilhaft. Das Anfahrmoment des Rotors ist durch die erhöhte Viskosität ebenso erhöht, welcher Anforderung die Erfindung in besonderer Eignung gerecht wird. Durch die Möglichkeit, die Drehzahl flexibel und je nach Betriebsphase einstellen zu können, kann auf ein Getriebe verzichtet werden. So fällt ein Großteil des sonst üblichen Trägheitsmoments der Antriebseinheit weg. Hierdurch kann die Gefahr von Schäden im Antrieb selbst bzw. an dem Rotor bei einer plötzlichen Blockade des Rotors vermindert werden. Ferner können auch übliche Schutzmaßnahmen, wie Rückkupplungen, Lastschaltkupplungen oder Scherbolzenkupplungen entfallen. Befinden sich im Zerfasergut massive, unzerfaserbare Quellstoffe, werden bei herkömmlichen Pulpern massive Schläge auf den Rotor und damit das Antriebssystem übertragen. Dabei wirken sich die Schwungmassen konventioneller Antriebe sehr ungünstig aus. Bei dem erfindungsgemäßen Pulper werden diese Schläge im Magnetfeld des Synchronmotors voll gedämpft und gelangen so nicht auf das Antriebsgehäuse des Motors. Aufgrund der geringen Anzahl an Maschinenelementen ist der Gesamtwirkungsgrad des Antriebs sehr günstig, wodurch Energie eingespart wird. Der Antrieb des erfindungsgemäßen Pulpers ist aufgrund der geringen Anzahl von Bestandteilen im Antrieb vergleichsweise leicht und nahezu wartungsfrei. Da die Kraftübertragung im Synchronmotor berührungslos verläuft und der Hauptantriebsmotor nur so schnell läuft, wie der Rotor selbst, läuft dieser Antrieb nahezu lautlos. Mit der direkten Kopplung des Synchronmotors an den Rotor ergibt sich eine sehr platzsparende Vorrichtung, die zudem ein niedriges Gewicht im Vergleich zu herkömmlichen Pulpern aufweist. Insofern eignet sich der erfindungsgemäße Pulper auch für mobile Einsatzzwecke. Die Verbindung des Synchronmotors mit der direkten Kopplung des Antriebs an den Pulperrotor ermöglicht ferner, sehr schnell auf geänderte Betriebsbedingungen zu reagieren und den Antrieb auf die geänderten Bedingungen einzustellen, da die Antriebseinheit ein geringes Trägheitsmoment aufweist und aufgrund der Steuerung die Drehzahl und/oder das Drehmoment auf einfache Weise veränderbar ist.

Der Erfindung kommt damit die Grundidee zu, einen Drehzahl variablen Synchronmotor direkt, d.h. ohne Getriebe und ohne Maschinentrieb an einen Rotor eines Pulpers zu koppeln. Unter Beibehaltung eines maximalen Drehmoments kann bei Ansprechen auf Betriebsbedingungen die Drehzahl angepasst werden oder auch im Ansprechen auf Betriebsbedingungen das Drehmoment eingestellt werden.

Um zu verhindern, dass sich der Rotor im Betrieb festfährt, können Mittel zur Erfassung des Laststroms sowie Mittel zur Erfassung der Drehung der Antriebswelle des Synchronmotors umfasst sein, an deren Ausgängen die Steuereinrichtung angeschlossen ist. Auf diese Weise kann die Steuereinrichtung sofort erfassen, wenn geänderte Betriebsbedingungen vorliegen. Beim Blockieren des Rotors ist eine erhöhte Stromaufnahme die Folge, von der die Steuereinrichtung informiert wird, so dass Motorparameter, beispielsweise die Antriebswelle mit einer veränderten Drehzahl auf die geänderte Betriebsbedingung eingestellt werden kann. Ferner kann nach der Verarbeitung des Störguts und dem Erfassen einer darauf folgenden verminderten Stromaufnahme des Motors die Vorrichtung wieder auf vorhergehende Sollparameter eingestellt werden.

Wie bereits erläutert, kann durch die Kombination des an einen Frequenzumformer angeschlossenen Drehstrom-Synchronmotors mit einer direkten Kopplung ohne Getriebe an einen Pulperrotor erreicht werden, dass sehr schnell, d.h. ohne wesentliche Verzögerung auf Veränderungen der Betriebsbedingungen reagiert werden kann, so dass in vielen Fällen eine Blockade im Vorfeld vermieden wird. Aber auch beim Auftreten einer Blockade weist der erfindungsgemäße Pulper aufgrund seines niedrigen Trägheitsmoments und aufgrund der Drehzahlvariabilität des gesamten Antriebs den Vorteil auf, dass die Blockade des Rotors leicht dadurch aufgehoben werden kann, dass die Antriebswelle im Ansprechen auf den Ist-Laststrom und/oder die Ist-Drehlage in vorteilhafter Weise in ein Schaukeln oder Rütteln versetzt wird.

Die Leistung des Motors liegt bei etwa 10 - 500 kW.

Verfahrenseitig wird die angegebene Aufgabe durch ein Verfahren zum Betrieb eines Pulpers gemäß obiger Beschreibung gelöst, wobei in einer StartBetriebsphase ausgehend vom Stillstand des Rotors die Drehzahl des Synchronmotors unter Nutzung einer vorgegebenen Laststromgrenze mit im Wesentlichen konstantem Motordrehmoment auf eine vorgegebene Soll-Drehzahl geregelt wird, wobei im Ansprechen auf das Erfassen einer Blockade der Antriebswelle der Antrieb rückwärts gesteuert wird, worauf nach dem Erfassen einer Rückwärtsdrehung der Antriebswelle diese über eine vorgegebene Zeitdauer oder Drehzahl mit der Laststromgrenze rückwärts und nachfolgend wieder vorwärts bewegt wird. Der beschriebene Vorgang kann aufgrund des verminderten Trägheitsmoments des Antriebs sofort nach der Erfassung eines erhöhten Laststroms eingeleitet werden, wodurch die Gefahr einer Blockade des Pulpers wirksam vermindert bzw. aufgehoben ist. Die geschaffenen Systemeigenschaften eines Vor- und Rücklaufes des Rotors mithilfe des gewählten Torque-Motors wirken sich auch vorteilhaft zum Auflösen, d.h. Aufschließen des in den Pulper eingebrachten Stoffgemisches aus. Durch diese Vor- und Rückbewegung wird der Aufschlussprozess schwerer zerfaserbarer Stoffe beschleunigt.

Um den Motor nicht zu überlasten, kann vorgesehen sein, dass nach dem Überschreiten einer vorgegebenen Laststromgrenze die Drehzahl erniedrigt wird und nach der Beendigung der Überlast-Betriebsphase die Motordrehzahl wieder auf einen Soll-Wert geregelt wird.

Grundsätzlich können für bestimmte Betriebsbedingungen vorgegebene Abläufe für die Motoransteuerung vorgesehen sein, um einerseits sicherzustellen, dass die Rotorwelle nicht festläuft und andererseits der Motor nicht überlastet wird. Insbesondere beim Einsatz des erfindungsgemäßen Pulpers in einer Prozesskette kann es notwendig sein, den Durchsatz zu regeln, ihn beispielsweise auf einem konstanten Wert zu halten. Hierzu kann eine das Zerfasergut betreffende Erfassungsgröße wie Gewicht, Volumen oder Feuchtigkeit mit einer entsprechenden Einrichtung erfasst und zum Steuern oder Regeln der Drehzahl des Synchronmotors verwendet werden.

Beim erfindungsgemäßen Verfahren kann ferner vorgesehen sein, dass über den gesamten Drehzahlbereich des Synchronmotors eine diesem zugeordnete Vorschubeinrichtung in Abhängigkeit der Stromaufnahme des Synchronmotors gesteuert wird.

Die Erfindung wird nun ferner mit Bezug auf die beigefügten Zeichnungen näher erläutert, in denen
- Fig. 1 einen Pulper mit Torque-Motor in schematischer Ansicht, und
- Fig. 2 den Anschlussbereich des Pulper-Rotors mit dem Torque-Motor in vergrößerter Ansicht zeigt.

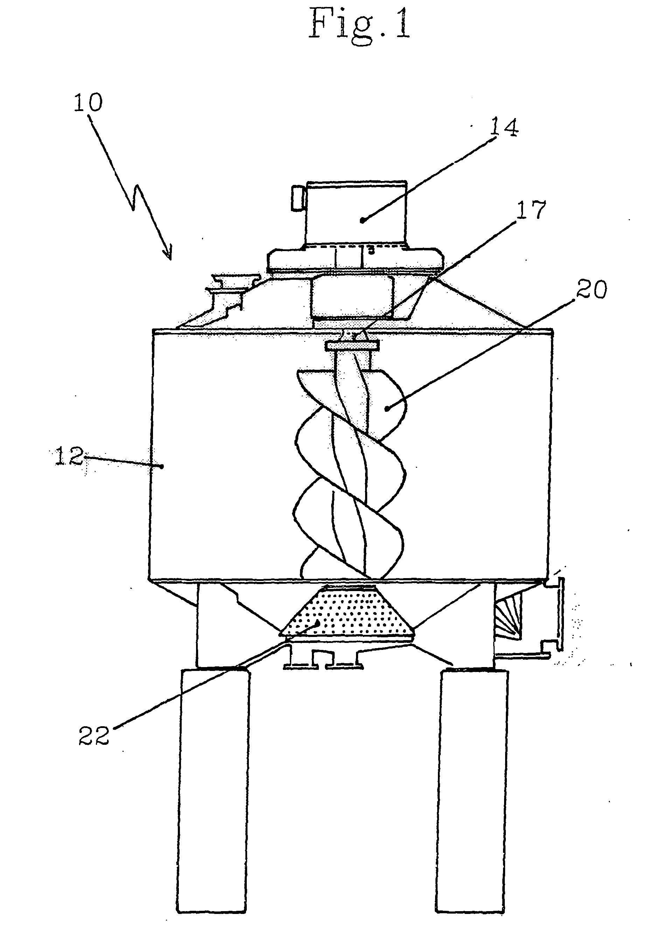

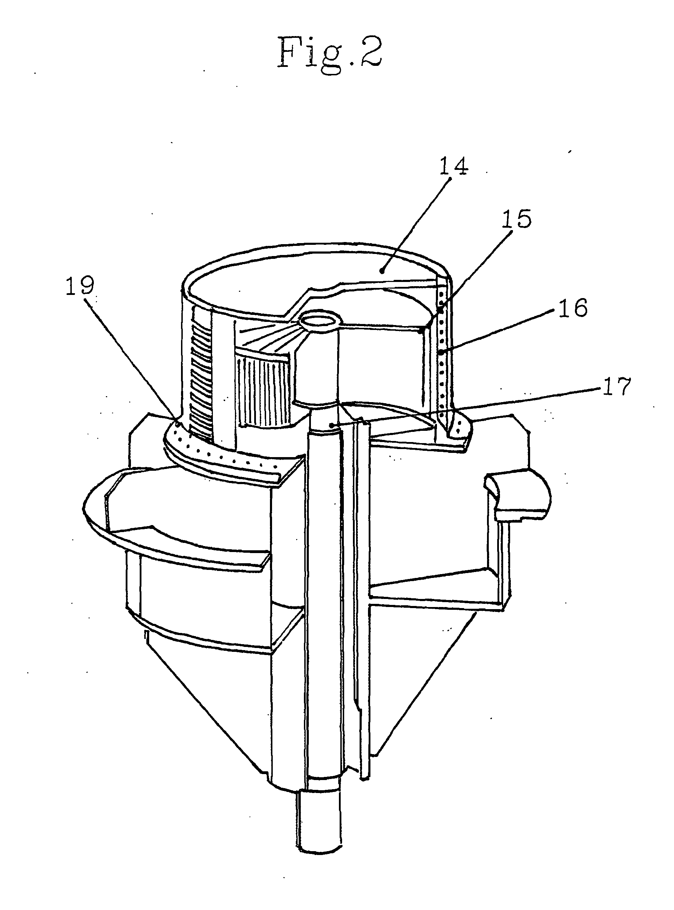

In Fig. 1 ist der Pulper allgemein mit der Bezugsziffer 10 gekennzeichnet. Im zylindrischen Pulper-Gehäuse 12 befindet sich ein zentrisch gelagerter PulperRotor 20. An seinem Fuß ist ein Sieb 22 installiert, durch das lediglich gut zerfaserte und in der Lösung aufgeschlossene Substanz hindurch tritt. Der Rotor 20 wird mittels eines Drehstrom-Synchronmotors angetrieben, dessen Motorgehäuse 14 oben auf dem Pulper-Gehäuse 12 zentrisch aufsitzt und mit Hilfe eines Flansches 19 (siehe Fig. 2) befestigt ist. Im Bodenbereich des Pulpers sind Abläufe zur Entnahme des Pulper-Inhalts vorgesehen.

Fig. 2 zeigt den Anschluss des Torque-Motors in vergrößerter Ansicht. Der Motor ist über den Flansch 19 fest mit dem Pulper-Gehäuse verbunden. Im Schnitt des Motorgehäuses 14 ist der Motor-Stator 16 sowie der Motor-Läufer 15 zu sehen. Im Anschlussbereich 17 ist die Abtriebswelle des Motors mit der Achse des Pulper-Rotors verbunden.

### Bezugszeichenliste

- 10: Pulper
- 12: Pulper-Gehäuse
- 14: Torque-Motor-Gehäuse
- 15: Motor-Läufer
- 16: Motor-Stator
- 17: Anschluss von Motorwelle und Rotor
- 19: Befestigungsflansch
- 20: Rotor
- 22: Sieb

## Patentansprüche

1. Pulper (10) zur Aufarbeitung von Abfällen und/oder Produktionsresten umfassend einen Behälter, in dem ein Rotor (20) vorgesehen ist, um das aufzubereitende Stoffgemisch zu zerfasern, sowie ein Sieb (22), mit dem das zerfaserte Gemenge aus dem Behälter abgezogen werden kann, wobei der Rotor (20) mit einem Elektromotor angetrieben ist, der eine Antriebswelle aufweist, die in Wirkverbindung mit dem Rotor (20) steht,
**dadurch gekennzeichnet, dass** der Elektromotor als Drehstrom-Synchronmotor zum Betrieb einer Drehzahl zwischen 0 und 1000 U/min ausgebildet ist, der an einen Ausgang eines von einer Steuereinrichtung gesteuerten Frequenzumformers angeschlossen ist, wobei der Antriebswellenabtrieb des Drehstrom-Synchronmotors direkt mit der Rotorwelle verbunden ist.

2. Pulper (10) nach Anspruch 1, **dadurch gekennzeichnet, dass** die Steuereinrichtung an den Ausgang eines Mittels zur Erfassung des Laststromes und an den Ausgang eines Mittels zur Erfassung einer Drehung des Antriebswellenabtriebs des Drehstrom-Synchronmotors angeschlossen ist und die Steuereinrichtung bei festgefahrenem Rotor (20) den Frequenzumformer zum Hin- und Herbewegen des Antriebswellenabtriebs im Ansprechen auf den Ist-Laststrom und/oder die Ist-Drehlage des Antriebswellenabtriebs derart ansteuert, dass der festgefahrene Rotor in ein Schaukeln versetzt wird.

3. Verfahren zum Betrieb eines Pulpers nach einem der Ansprüche 1 bis 2, **dadurch gekennzeichnet, dass** in einer Startbetriebsphase ausgehend vom Stillstand des Rotors (20) die Drehzahl des Synchronmotors unter Nutzung einer vorgegebenen Laststromgrenze mit im Wesentlichen konstantem Motordrehmoment auf eine vorgegebene Soll-Drehzahl geregelt wird, wobei im Ansprechen auf das Erfassen einer Blockade des Antriebswellenabtriebs der Antrieb rückwärts gesteuert wird, worauf nach dem Erfassen einer Rückwärtsdrehung des Antriebswellenabtriebs dieser über eine vorgegebene Zeitdauer oder Drehzahl mit der Laststromgrenze rückwärts und nachfolgend wieder vorwärts bewegt wird.

4. Verfahren nach Anspruch 3, **dadurch gekennzeichnet, dass** der Frequenzumformer in einer Normalbetriebsphase durch die Steuereinrichtung zum Beibehalten einer vorgegebenen Soll-Motordrehzahl des Synchronmotors angesteuert, wird, unter Einhaltung der vorgegebenen Laststromgrenze, wobei nach einem Überschreiten der Laststromgrenze die Drehzahl erniedrigt wird und nach der Beendigung der Überlastbetriebsphase die Motordrehzahl wieder auf den Sollwert geregelt wird.

5. Verfahren nach Anspruch 4, **dadurch gekennzeichnet, dass** in der Normalbetriebsphase im Ansprechen auf das Erfassen einer Blockade des Antriebswellenabtriebs der Antrieb rückwärts geschaltet wird, worauf nach dem Erfassen einer Rückwärtsdrehung des Antriebswellenabtriebs dieser über eine vorgegebene Zeitdauer oder bis zum Erreichen der eingestellten Reversierdrehzahl auf der Laststromgrenze rückwärts bewegt wird und nachfolgend wieder vorwärts bewegt wird.

6. Verfahren nach einem der vorangehenden Ansprüche 3 - 5, **dadurch gekennzeichnet, dass** nach dem Erfassen eines Stillstandes bei der Rückwärtsdrehung des Antriebswellenabtriebs dieser sofort wieder zur Vorwärtsdrehung angesteuert wird.

7. Verfahren nach einem der vorangehenden Verfahrensansprüche 3 - 6, **dadurch gekennzeichnet, dass** die Drehrichtung des Antriebswellenabtriebs mehrmals umgeschaltet wird, um unter Nutzung der Rotationsenergie des Rotors (20) und des Drehmoments des Synchronmotors ein Schaukeln oder Rütteln des Rotors (20) zu verursachen, damit dieser wieder freigängig wird.

## Claims

1. A pulper (10) for recycling wastes and/or product residuals comprising a tank in which a rotor (20) is provided for defibrating the stock mixture to be recycled, as well as a screen (22) for drawing off the defibrated outfeed from the tank, the rotor (20) being powered by an electric motor comprising a drive shaft in active transmission with the rotor (20), **characterized in that** the electric motor is configured as a three-phase synchronous motor for operation in a speed range from 0 to 1000 rpm connected to the output of a frequency inverter controlled by a controller, the output of the drive shaft of the three-phase synchronous motor being directly connected to the rotor shaft.

2. The pulper (10) as set forth in claim 1, **characterized in that** the controller is connected to the output of a means for sensing the load current and to the output of a means for sensing rotation of the drive shaft output of the three-phase synchronous motor and, when the rotor (20) is plugged, the controller activating the frequency inverter to reciprocate the drive shaft output in response to the actual load current and/or the actual rotary position of the drive shaft output such that the plugged rotor is caused to shake.

3. A method for operating a pulper, **characterized in that** in a first phase in starting operation with the rotor (20) stationary the speed of the synchronous motor is controlled up to a predefined target speed in exploiting a predefined load current limit with a substantially constant motor torque with a controlled power reversal when the drive shaft output is sensed plugged, followed by a return to forwards power after having sensed a reversal of the drive shaft output for a predefined period of time or speed at the load current limit.

4. The method as set forth in claim 1, **characterized in that** in the normal operation phase the frequency inverter is activated by the controller to maintain a predefined target motor speed of the synchronous motor in maintaining the predefined load current limit, the speed being reduced as soon as the load current limit is exceeded and returned controlled to the target speed as soon as the overload operation phase is terminated.

5. The method as set forth in claim 2, **characterized in that** in response to sensing the drive shaft output plugged in the normal operation phase the power is reversed, after which following sensing reverse rotation of the drive shaft output for a predefined period of time or up to attaining the set reversal speed at the load current limit, the power is returned to forwards operation.

6. The method as set forth in any of the claims 1 - 3, **characterized in that** the drive shaft output, after sensing standstill in reverse rotation thereof, is instantly returned to forwards rotation.

7. The method as set forth in any of the claims 1 - 4, **characterized in that** the direction of rotation of the drive shaft output is reversed repeatedly by exploiting the rotational energy of the rotor (20) and torque of the synchronous motor to shake the rotor (20) in remedying plugging.

## Revendications

1. Triturateur (10) pour traiter des déchets et/ou des résidus de production, comprenant un conteneur dans lequel est prévu un rotor (20) pour broyer le mélange à préparer ainsi qu'un crible (22) qui permet de retirer du conteneur le mélange broyé, le rotor (20) étant entraîné par un moteur électrique muni d'un arbre d'entraînement qui est en liaison active avec le rotor (20),
**caractérisé en ce que** le moteur électrique est un moteur synchrone à courant triphasé conçu pour une vitesse de rotation comprise entre 0 et 1 000 tr/min et est raccordé à une sortie d'un convertisseur de fréquence commandé par un dispositif de commande, l'entraînement de sortie de l'arbre d'entraînement du moteur synchrone à courant triphasé étant directement relié à l'arbre de rotor.

2. Triturateur (10) selon la revendication 1, **caractérisé en ce que** le dispositif de commande est raccordé à la sortie d'un moyen destiné à détecter le courant de charge et à la sortie d'un moyen destiné à détecter une rotation de l'entraînement de sortie de l'arbre d'entraînement du moteur synchrone à courant triphasé et, quand le rotor (20) est bloqué, le dispositif de commande actionne le convertisseur de fréquence pour que l'entraînement de sortie de l'arbre d'entraînement exécute un va-et-vient en réagissant au courant réel de charge et/ou à la position réelle de rotation de l'entraînement de sortie de l'arbre d'entraînement de telle manière que le rotor bloqué fasse un mouvement de bascule.

3. Procédé pour faire fonctionner un triturateur selon l'une des revendications 1 à 2, **caractérisé en ce que**, lors d'une phase de démarrage à partir du repos du rotor (20), la vitesse de rotation du moteur synchrone est réglée, en tenant compte d'une limite prédéfinie de courant de charge, à une vitesse nominale prédéfinie de rotation où le couple de rotation du moteur est pratiquement constant, l'entraînement étant commandé en arrière en réagissant à la détection d'un blocage de l'entraînement de sortie de l'arbre d'entraînement, puis, après qu'a été détecté que l'entraînement de sortie de l'arbre d'entraînement tourne en arrière, celui-ci est actionné vers l'arrière puis de nouveau vers l'avant à la limite de courant de charge pendant une durée ou un nombre de tours prédéfinis.

4. Procédé selon la revendication 3, **caractérisé en ce que**, lors d'une phase de fonctionnement normal, le convertisseur de fréquence est actionné par le dispositif de commande pour que le moteur synchrone conserve une vitesse nominale de rotation prédéfinie, en prenant en compte la limite prédéfinie de courant de charge, la vitesse de rotation étant réduite après que la limite du courant de charge a été dépassée et la vitesse de rotation du moteur de nouveau réglée à la valeur nominale après que la phase de surcharge est terminée.

5. Procédé selon la revendication 4, **caractérisé en ce que**, lors de la phase de fonctionnement normal, l'entraînement est mis en rotation arrière suite à ce qu'un blocage de l'entraînement de sortie de l'arbre d'entraînement a été détecté, puis, après qu'a été détecté que l'entraînement de sortie de l'arbre d'entraînement tourne en arrière, celui-ci tourne vers l'arrière à la limite de courant de charge pendant une durée prédéfinie ou jusqu'à ce que la vitesse de rotation réglée de va-et-vient soit atteinte et tourne ensuite de nouveau vers l'avant.

6. Procédé selon l'une des revendications précédentes 3 à 5, **caractérisé en ce que**, après qu'un état de repos a été détecté lorsque l'entraînement de sortie de l'arbre d'entraînement tourne en arrière, celui-ci est aussitôt commandé pour tourner vers l'avant.

7. Procédé selon l'une des revendications précédentes 3 à 6, **caractérisé en ce que** l'entraînement de sortie de l'arbre d'entraînement change plusieurs fois de sens de rotation pour qu'en utilisant l'énergie de rotation du rotor (20) et le couple de rotation du moteur synchrone le rotor (20) fasse un mouvement de bascule ou soit secoué afin qu'il puisse de nouveau se mouvoir librement.
